# EUROPÄISCHE PATENTANMELDUNG

(11) **EP 1 207 077 A2**
(43) Veröffentlichungstag der Anmeldung: **22.05.2002**
(21) Anmeldenummer: 01120923.6
(22) Anmeldetag: 31.08.2001
(51) Int. Cl.: B60R 1/074

(54) **Kraftfahrzeug-Rückblickspiegel**

(30) Priorität: 16.11.2000 DE 10056915
(71) Anmelder: Bühler Motor GmbH, 90459 Nürnberg (DE)
(72) Erfinder: Seichter, Werner, 91166 Georgensgmünd (DE); Keidel, Michael, 91186 Büchenbach (DE)

(57) **Zusammenfassung**

Die Erfindung betrifft einen Kraftfahrzeug-Rückblickspiegel mit einem Spiegelkopf, der über ein erstes Schwenkgelenk an einem Zwischenstück und das Zwischenstück über ein zweites Schwenkgelenk an einem karosseriefesten Spiegelfuß schwenkbar befestigt ist, wobei der Spiegelkopf federbeaufschlagt am Zwischenstück gehalten ist und im zweiten Schwenkgelenk ein Ausgangszahnradsegment eines karosseriefesten Abklappantriebes schwenkbar gelagert ist. In ein Zwischenstück ist ein erstes Rastmittel (7) angeordnet, das mit einem zweiten Rastmittel (8) im Ausgangszahnradsegment (6) korrespondiert, wobei die beiden Rastmittel (78) im Normalbetrieb eingerastet sind.

## Beschreibung

Die Erfindung betrifft einen Kraftfahrzeug-Rückblickspiegel mit einem Spiegelkopf, der über ein erstes Schwenkgelenk an einem Zwischenstück und das Zwischenstück über ein zweites Schwenkgelenk an einem karosseriefesten Spiegelfuß des Kraftfahrzeugs schwenkbar befestigt ist, wobei der Spiegelkopf federbeaufschlagt am Zwischenstück gehalten ist und im zweiten Schwenkgelenk ein Ausgangszahnradsegment eines karosseriefesten Abklappantriebes schwenkbar gelagert ist.

Bei einem bekannten Kraftfahrzeug-Rückblickspiegel dieser Art ist das Zwischenstück mit dem Ausgangszahnradsegment fest verbunden. Dadurch ist eine Rutschkupplung erforderlich, die bei einer von außen auf den Spiegel einwirkenden Kraft, die gegen Fahrtrichtung wirkt, eine Beschädigung des Abklappantriebes verhindert. Eine Beschädigung kann deshalb erfolgen, weil ein Untersetzungsgetriebe im Abklappantrieb selbsthemmend und damit nicht nachgiebig ausgeführt ist. Die erforderliche Rutschkupplung erfordert erheblichen Aufwand bei der Herstellung und Montage. Sie stellt gegebenenfalls auch eine Fehlerquelle dar.

Daher ist es Aufgabe der Erfindung bei einem Kraftfahrzeug-Rückblickspiegel der eingangs genannten Gattung für einen einfachen Aufbau und geringen Teileaufwand zu sorgen, wobei ein motorisches Zurückholen des manuell abgeklappten Spiegelkopfs möglich ist.

Diese Aufgabe wird erfindungsgemäß dadurch gelöst, dass im oder am Zwischenstück ein erstes Rastmittel angeordnet ist, das mit einem zweiten Rastmittel am oder im Ausgangszahnradsegment korrespondiert, wobei die beiden Rastmittel im Normalbetrieb eingerastet sind. Auf eine Rutschkupplung, die aus einer Vielzahl von Teilen besteht kann hier verzichtet werden.

Weiterbildungen der Erfindung werden in den Unteransprüchen dargestellt. Indem das erste Rastmittel mit zwei Schrägen versehen ist, die gegenüber der Schwenkebene unterschiedlich stark geneigt sind, können die Rastmittel über die stärker geneigte Schräge durch eine äußere gegen die Fahrtrichtung gerichtete Kraft ausrasten, motorisches Ausrasten ist jedoch nicht möglich. Wird das erste Rastmittel über das Ausgangszahnradsegment hinaus bewegt, dann kann das erste Rastmittel über die geringer geneigte Schräge motorisch wieder in die Raststellung zurückgebracht und der Spiegelkopf somit zurückgeholt werden

Die Rastkraft wird neben dem Schrägungswinkel auch durch die Federkonstante einer das erste Rastmittel in Axialrichtung im zweiten Rastmittel haltende Feder bestimmt. Diese Feder ist im Zwischenstück angeordnet. Der Bewegungsspielraum des ersten Rastmittels kann durch Anschläge begrenzt sein.

Die Schrägen können auch am zweiten Rastmittel und am Rand des Ausgangszahnradsegments angeordnet sein.

Zweckmäßigerweise werden die beiden Rastmittel aus Metallmaterialien hergestellt, um eine erhöhte Abriebfestigkeit gewährleisten zu können.

Ein Ausführungsbeispiel der Erfindung wird nachfolgend anhand der Zeichnung näher erläutert. Es zeigen:
Fig. 1 eine Draufsicht auf einen erfindungsgemäßen Kraftfahrzeug-Rückblickspiegel,
Fig. 2 eine räumliche Darstellung des Kraftfahrzeug-Rückblickspiegels aus Fig. 1,
Fig. 3a und 3b eine Darstellung von Rastmitteln und
Fig. 4 eine Seitenansicht des Kraftfahrzeug-Rückblickspiegels aus Fig. 1.

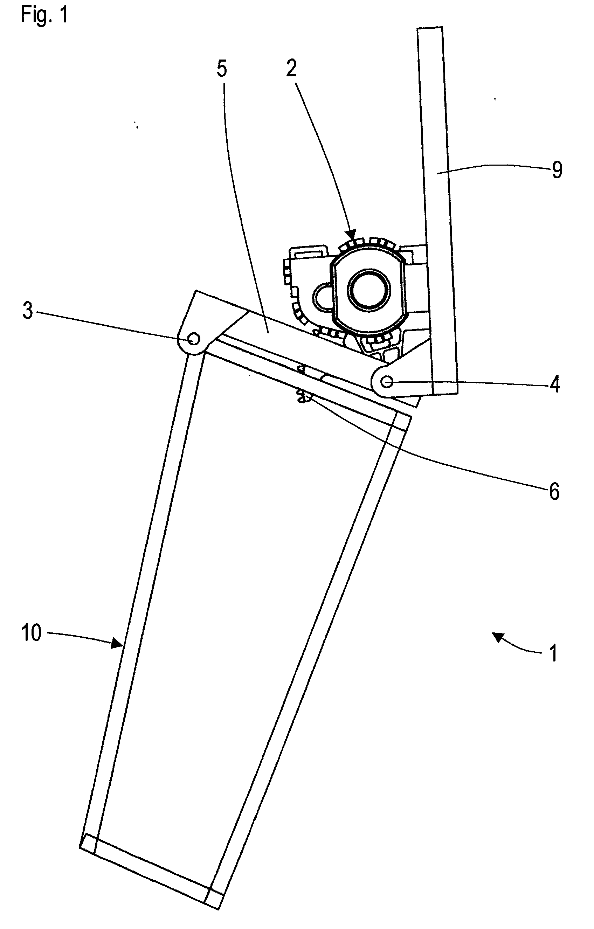

Fig. 1 zeigt eine Draufsicht auf einen erfindungsgemäßen Kraftfahrzeug-Rückblickspiegel 1, mit einem Spiegelkopf 10 der über ein erstes Schwenkgelenk 3 mit einem Zwischenstück 5 schwenkbeweglich verbunden ist, das über ein zweites Schwenkgelenk 4 mit einem karosseriefesten Spiegelfuß 9 schwenkbeweglich verbunden ist, einen am Spiegelfuß 9 montierten Abklappantrieb 2 mit einem Ausgangszahnradsegment 6, das in dem zweiten Schwenkgelenk 4 gelagert ist.

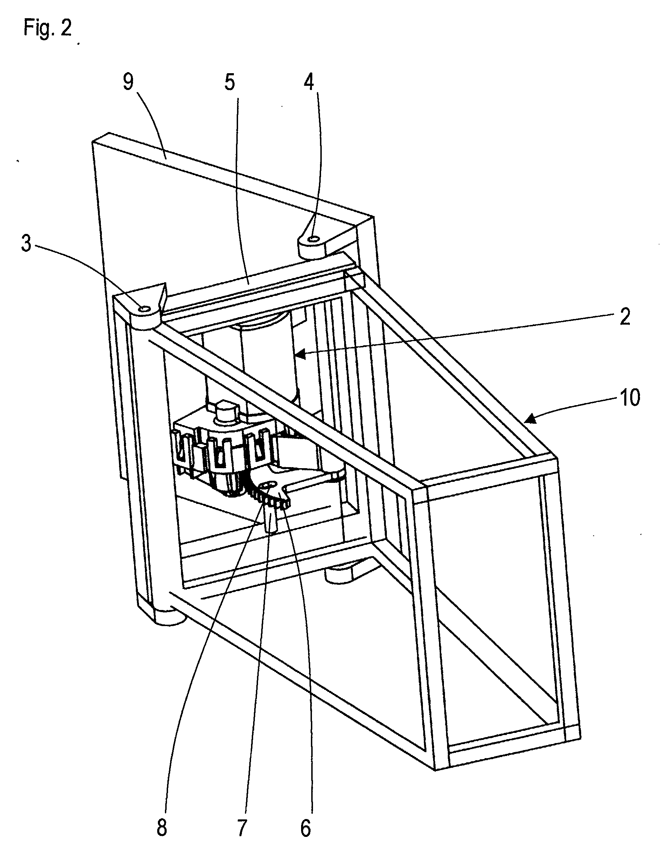

Fig. 2 zeigt eine räumliche Darstellung des Kraftfahrzeug-Rückblickspiegels aus Fig. 1, mit dem Spiegelkopf 10, dem ersten Schwenkvgelenk 3, dem Zwischenstück 5, dem zweiten Schwenkgelenk 4 den karosseriefesten Spiegelfuß 9, eine erstes Rastmittel 7 am Zwischenstück 5 und ein zweites Rastmittel 8 im Ausgangszahnradsegment 6.

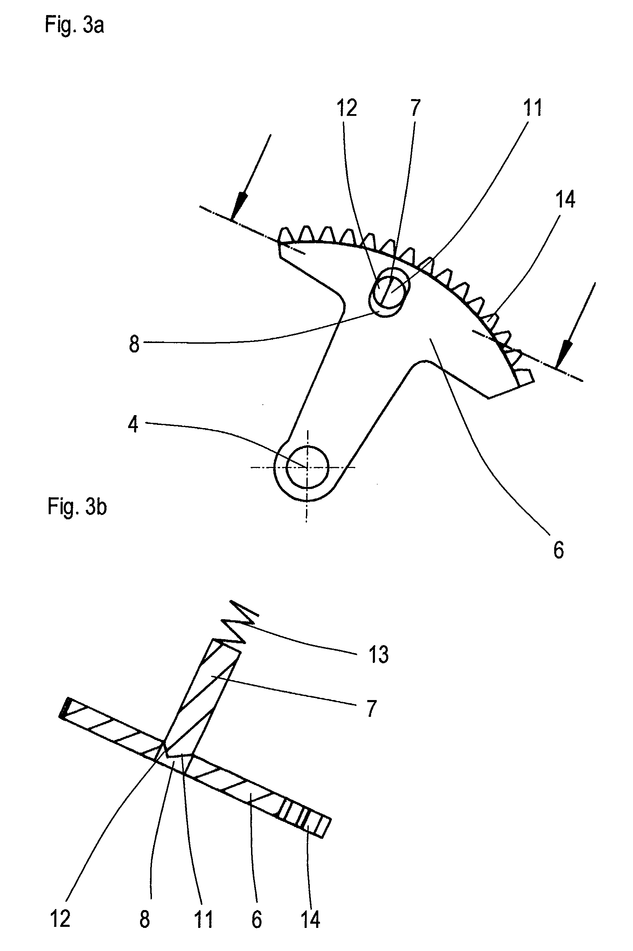

Fig. 3a zeigt eine vergrößerte Darstellung des zweiten Rastmittels 8 im mit einer Verzahnung 14 versehenen Ausgangszahnradsegment 6, in das das erste Rastmittel 7 eingreift, wobei das erste Rastmittel 7 durch eine Feder 13 mit dem zweiten Rastmittel 8 in Eingriff gehalten wird. Fig. 3b ist eine Schnittdarstellung der Fig. 3a, darin wird verdeutlicht, dass das erste Rastmittel 7 mit einer durch eine äußere Kraft überwindbaren aber motorisch nicht überwindbaren gegenüber einer Schwenkebene stark geneigten Schräge 11 und einer motorisch überwindbaren gegenüber der Schwenkebene gering geneigten Schräge 12 versehen ist. Die stark geneigte Schräge kann auch so ausgelegt sein, dass die notwendige Ausrastkraft größer ist als eine zu überwindende Federkraft, mit der der Spiegelkopf am Zwischenstück gehalten ist.

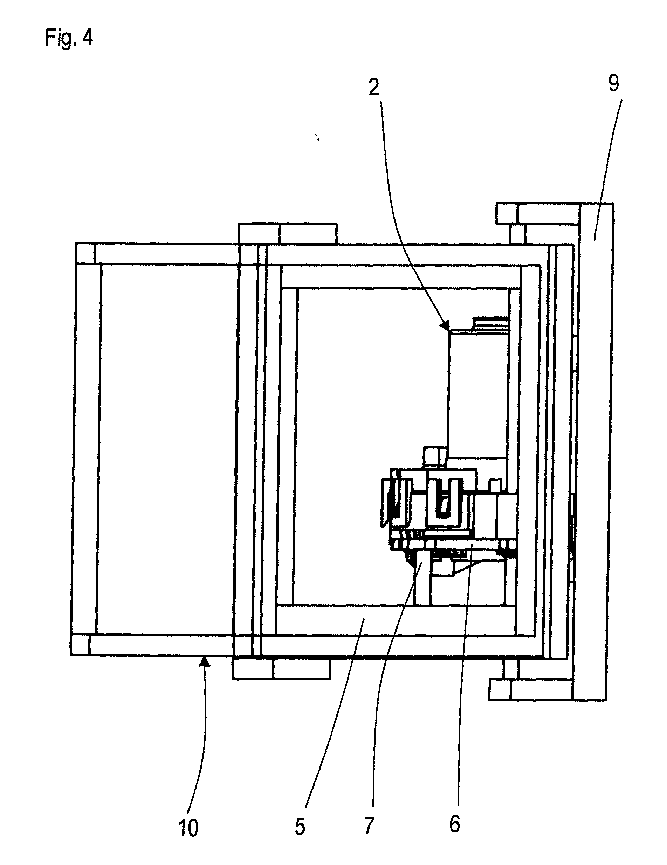

Fig. 4 zeigt eine Seitenansicht des Kraftfahrzeug-Rückblickspiegels aus Fig. 1, mit dem Spiegelkopf 10, dem Abklappantrieb 2, dem Zwischenstück 5, dem ersten Rastmittel 7, dem Ausgangszahnradsegment 6 und dem karosseriefesten Spiegelfuß 9.

### Funktionsweise

Im Normalbetrieb sind die Rastmittel 7 und 8 miteinander in Eingriff und stellen dadurch eine Verbindung zwischen dem Zwischenstück 5 und dem Ausgangszahnradsegment 6 her, die so dimensioniert ist, dass sie den auftretenden Winddrücken und Fahrzeugbeschleunigungen ohne Vibrationseffekte des Spiegelkopfs 10 standhalten kann. Bei einer motorischen Betätigung des Spiegelkopfs 10 z.B. bei einer Fahrt z.B. durch eine enge Garageneinfahrt, wird der Abklappantrieb 2 elektrisch betätigt und treibt über das Ausgangszahnrad, den Rastmitteln 7 und 8 und dem Zwischenstück 5 den Spiegelkopf 10 an, bis eine Endstellung in der Nähe der Fahrzeugkarosserie erreicht ist. Gewöhnlich ist ein zusätzlicher Anschlag vorhanden, der eine Beschädigung der Karosserie verhindert. Wird eine äußere Kraft, z.B. durch ein Hindernis auf den Spiegelkopf 10 ausgeübt, die größer ist als die im Fahrbetrieb zu erwartenden Kräfte, wird der Spiegelkopf 10 ohne eine Änderung der Stellung des Ausgangszahnradsegmentes 6 abgeklappt. Hierbei werden zwei Fälle unterschieden:
a) Die äußere Kraft wirkt in Fahrtrichtung: hier wird der Spiegelkopf 10 um das erste Schwenkgelenk 3 geschwenkt und anschließend durch eine zwischen dem Zwischenstück 5 und dem Spiegelkopf 10 wirkende Feder (nicht dargestellt) zurückbewegt. Da die Rastmittel so geformt sind, dass sie nur dann ausrasten, wenn die Kraft entgegen der Fahrtrichtung wirkt, bleiben die Rastmittel während des gesamten Vorgangs eingerastet. Im übrigen liegt das Zwischenstück in der Fahrposition an einem Anschlag an, so dass ein Ausrasten unmöglich ist.
b) Die äußere Kraft wirkt entgegen der Fahrtrichtung: hier wird der Spiegelkopf 10 um das zweite Schwenkgelenk 4 geschwenkt. Dabei rastet das erste Rastmittel 7 aus dem zweiten Rastmittel 8 aus. Dabei wird das erste Rastmittel gegen die Kraft der Feder 13 bewegt und reitet auf dem Ausgangszahnradsegment 6 auf. Bei einem großen Auslenkungswinkel gerät das erste Rastmittel über einen Rand des Ausgangszahnradsegmentes 6 und federt dort zurück. Anschließend bleibt diese Stellung des Spiegelkopfs zunächst erhalten. Dann wird der Abklappantrieb 2 betätigt, wobei sich das Ausgangszahnradsegment auf den Spiegelkopf zubewegt. Aufgrund der gering gegen die Schwenkebene geneigte Schräge 11, kann der Abklappantrieb 2 genügend Kraft aufbringen um diese zu überwinden. Dadurch wird das Ausgangszahnradsegment 6 soweit bewegt, bis die Rastmittel 7 und 8 wieder miteinander in Eingriff kommen. Sobald dies erreicht ist, kann der Spiegelkopf 10 motorisch wieder in seine ursprüngliche Fahrstellung zurückgeholt werden.

### Bezugszeichenliste

- 1: Kraftfahrzeug-Rückblickspiegel
- 2: Abklappantrieb
- 3: erstes Schwenkgelenk
- 4: zweites Schwenkgelenk
- 5: Zwischenstück
- 6: Ausgangszahnradsegment
- 7: erstes Rastmittel
- 8: zweites Rastmittel
- 9: karosseriefester Spiegelfuß
- 10: Spiegelkopf
- 11: erste Schräge (gering geneigt)
- 12: zweite Schräge (stark geneigt)
- 13: Feder
- 14: Verzahnung

## Patentansprüche

1. Kraftfahrzeug-Rückblickspiegel (1) mit einem Spiegelkopf (10) der über ein erstes Schwenkgelenk (3) an einem Zwischenstück (5) und das Zwischenstück (5) über ein zweites Schwenkgelenk (4) an einem karosseriefesten Spiegelfuß (9) des Kraftfahrzeugs schwenkbar befestigt ist, wobei der Spiegelkopf (10) federbeaufschlagt am Zwischenstück (5) gehalten ist und im zweiten Schwenkgelenk (4) ein Ausgangszahnradsegment (6) eines karosseriefesten Abklappantriebes (2) schwenkbar gelagert ist, **dadurch gekennzeichnet, dass** in oder an dem Zwischenstück (5) ein erstes Rastmittel (7) angeordnet ist, das mit einem zweiten Rastmittel (8) im Ausgangszahnradsegment (6) korrespondiert, wobei die beiden Rastmittel (7, 8) im Normalbetrieb eingerastet sind.

2. Kraftfahrzeug-Rückblickspiegel nach Anspruch 1, **dadurch gekennzeichnet, dass** das erste Rastmittel (7) mit zwei Schrägen (11, 12) versehen ist, die gegenüber einer Schwenkebene unterschiedlich stark geneigt sind.

3. Kraftfahrzeug-Rückblickspiegel nach Anspruch 1 oder 2, **dadurch gekennzeichnet, dass** das zweite Rastmittel (8) und/oder das Ausgangszahnradsegment (6) mit zwei Schrägen versehen sind/ist, die gegenüber der Schwenkebene unterschiedlich stark geneigt sind.

4. Kraftfahrzeug-Rückblickspiegel nach Anspruch 2 oder 3, **dadurch gekennzeichnet, dass** die erste Schräge (11) eine geringe Neigung aufweist, so dass sie motorisch überwindbar ist und die zweite Schräge (12) eine starke Neigung aufweist, so dass sie durch eine äußere Kraft überwindbar ist aber motorisch nicht überwunden werden kann.

5. Kraftfahrzeug-Rückblickspiegel nach Anspruch 1, 2, 3 oder 4, **dadurch gekennzeichnet, dass** die Rastmittel (7, 8) nur bei Einwirkung einer entgegen der Fahrtrichtung auf den Spiegelkopf (10) einwirkenden äußeren Kraft ausrastbar sind.

6. Kraftfahrzeug-Rückblickspiegel nach Anspruch 1, 2, 3, 4 oder 5, **dadurch gekennzeichnet, dass** im eingerasteten Zustand zumindest eines der Rastmittel (7, 8) durch eine Feder (13) mit dem übrigen Rastmittel in Eingriff gehalten ist.

7. Kraftfahrzeug-Rückblickspiegel nach Anspruch 6, **dadurch gekennzeichnet, dass** die Feder (13) im Zwischenstück (5) angeordnet ist und das erste Rastmittel (7) mit dem zweiten Rastmittel (8) in Eingriff hält.

8. Kraftfahrzeug-Rückblickspiegel nach zumindest einem der vorangehenden Ansprüche, **dadurch gekennzeichnet, dass** das erste Rastmittel (7) aus einem Metallmaterial besteht.

9. Kraftfahrzeug-Rückblickspiegel nach zumindest einem der vorangehenden Ansprüche, **dadurch gekennzeichnet, dass** das zweite Rastmittel (8) aus einem Metallmaterial besteht.
